# EUROPEAN PATENT APPLICATION

(11) **EP 4 806 699 A1**
(43) Date of publication of application: **16.09.2026**
(21) Application number: 25163648.6
(22) Date of filing: 13.03.2025
(51) Int. Cl.: B60K 35/22, B60K 35/53, B60K 35/60, B60R 11/02

(54) **DISPLAY APPARATUS FOR VEHICLE**

(71) Applicant: Hyundai Mobis Co., Ltd., Seoul 06141 (KR)
(72) Inventor: JANG, Kil-Pyung, 16891 Youngins-si (KR); LEE, Hyun Jee, 16891 Youngins-si (KR)
(74) Representative: Vossius & Partner Patentanwälte Rechtsanwälte mbB

(57) **Abstract**

The present disclosure relates to a display apparatus for a vehicle, and in more detail, the display apparatus for a vehicle includes a display module providing operation information of the display apparatus, a moving door module connected with a portion of the display module and performing a function of opening/closing the display module, and a driving module controlling a position of the moving door module in accordance with a control signal that is input, wherein the driving module controls opening/closing of the moving door module in accordance with the control signal on the basis of whether to open/close the moving door module.

## Description

### TECHNICAL FIELD

The following disclosure relates to a display apparatus for a vehicle.

### BACKGROUND

Various dynamic display products are being released to improve user convenience. For example, a slidable display for vehicles refers to a technology that is installed inside a vehicle and provides an expandable display for the driver and passengers in the vehicle. Such displays can mainly be used for infotainment systems, navigation, vehicle status, and control. Considering some implementation examples, slidable displays can be applied to in-vehicle infotainment systems. Through an expandable display, passengers can enjoy music, videos, news, and other multimedia content on a large screen. Further, slidable displays can also be used in a navigation system. It is possible to provide the driver of a vehicle with a more convenient navigation environment through additional map information of a larger screen. Further, slidable displays can be integrated in a status and control system of a vehicle. Through an expandable screen, a driver can monitor and control the status of a vehicle in more detail.

A tilting mechanism for vehicles, which is another example, refers to a mechanism in which a part or equipment of vehicles tilts or rotates. Such a mechanism is usually used to improve functions related to vehicle safety, convenience, or specific purposes. Considering a few implementation example, the tilting mechanism for vehicles can increase vehicle safety during driving. For example, a safety system that stabilizes a driver and passengers by tilting a specific part or seat in a corresponding direction when a vehicle senses a sharp turn or tilt can be applied. Further, the tilting mechanism can be used to improve the driving characteristics of vehicles. In particular, there are cases where driving stability is effectively improved by tilting a part of a vehicle in accordance with changing road conditions. Further, the tilting mechanism can be used to provide better convenience and accessibility to a driver and passengers by tilting a part or seat of a vehicle.

However, display apparatuses for vehicles to which the related art described above is applied may have durability limitations of the display in terms of vibration or impact due to the application of the mechanism to the display itself. Further, it is required to use a motor with high torque in order to move relatively heavy display products. This may cause a problem of increasing costs and package size.

### SUMMARY

An embodiment of the present disclosure is directed to providing a display apparatus for a vehicle that can implement dynamic effects through movement of a door positioned at the front of a display while the display remains fixed.

In one general aspect, a display apparatus for a vehicle according to various embodiments of the present disclosure includes: a display module providing operation information of the display apparatus; a moving door module connected with a portion of the display module and performing a function of opening/closing the display module; and a driving module controlling a position of the moving door module in accordance with a control signal that is input, wherein the driving module controls opening/closing of the moving door module in accordance with the control signal on the basis of whether to open/close the moving door module.

When the moving door module is in a closed state, the display module may turn off a backlight of the display that corresponds to an area hidden by a door of the moving door module.

The display module may include a back cover covering a rear of the display module, and the back cover may include multiple holes or a drainage channel formed at a lower end of the back cover.

The driving module may include: a motor providing a driving force; first to third gears connected with the motor and being rotated by the driving force transmitted from the motor; a gear sensor sensing a state of any one of the first gear to the third gear; and a plurality of sensing switches sensing operation of the moving door module.

The moving door module may include: a door having a predetermined size and covering at least a portion of a display of the display module; a supporting frame supporting the door; first and second links disposed on both sides of the supporting frame, respectively; and fourth and fifth gears disposed at positions being in contact with at least a portion of the first and second links, respectively.

The moving door module may further include first and second ribs disposed on both of the first and second links, and when the first and second links are rotated by rotation of the first to third gears, the first and second ribs may detect at least any one of the plurality of sensing switches.

The first gear may be connected with at least a portion of the motor, the second gear may be disposed under the first gear and may be rotated by rotation of the first gear, the gear sensor may be disposed at a position being in contact with at least a portion of a surface of the second gear and may be rotated by rotation of the second gear, and the third gear may be disposed at a position being in contact with at least a portion of a surface of the gear sensor and is rotated by rotation of the gear sensor.

The first gear may be a worm gear, the second gear may be a helical gear, and the third gear may be a spur gear.

The driving module may further include a shaft gear integrally connecting the third gear and any one link of the first or second link.

The first and second links may have a U-shape, and the fourth and fifth gears may be disposed at a center of the U-shapes, respectively, to rotate together when the first and second links are rotated.

The moving door module may further include: a main body accommodating at least partially the door, the supporting frame, the first to second links, and the fourth to fifth gears; and a plurality of rack gears disposed at both ends of the main body, respectively, and the fourth and fifth gears are rotated along the rack gears and are integrated with the moving door module.

The moving door module may further include: third and fourth links sharing a same center axis with the first and second links and being in contact with holes at both sides of the supporting frame, respectively; first and second bearings sharing a same center axis with the first and second links and disposed inside the third and fourth links, respectively; and first and second wave washers sharing a same center axis with the first and second links and disposed inside the first and second bearings, respectively.

The third and fourth links may be respectively fixed at ends to grooves formed at the main body and at other ends to holes of the first and second links.

The display module may further include a plurality of stoppers including a rubber material at any one of both ends and a lower end of the display module that are positions with which the door comes in contact when opening/closing.

The moving door module may further include a coil spring disposed between the door and the fourth gear.

The driving module may further include a Hall sensor sensing stoppage or a problem of the gear sensor.

When stoppage or a problem of the gear sensor is sensed by the Hall sensor, the motor may operate in an opposite direction of a current operation direction.

### BRIEF DESCRIPTION OF THE DRAWINGS

FIG. 1 is a perspective view illustrating a display apparatus for a vehicle by the present disclosure.
FIG. 2 is a perspective view illustrating a display module by the present disclosure.
FIG. 3 is an exploded view of FIG. 2.
FIG. 4 is a perspective view illustrating a moving door module by the present disclosure.
FIG. 5 is an exploded view of FIG. 4.
FIG. 6 is a perspective view illustrating a driving module by the present disclosure.
FIG. 7 is an exploded view of FIG. 6.
FIG. 8 is a perspective view illustrating the driving module and the moving door module in closing of the present disclosure.
FIG. 9 is a perspective view illustrating the driving module and the moving door module in opening of the present disclosure.
FIG. 10 is a partially enlarged perspective view illustrating the moving door module.
FIG. 11 and FIG. 12 are views illustrating some parts based on a reference axis of the moving door module.
FIG. 13 is a perspective view illustrating application of a stopper according to the present disclosure.
FIG. 14 is an enlarged perspective view of FIG. 13.
FIG. 15 is an enlarged perspective view of a portion different from FIG. 14.
FIGS. 16 and 17 are perspective views illustrating the positions where fifth and sixth links by the present disclosure are disposed.
FIG. 18 is a perspective view illustrating a defense mechanism in response to generation of an external force.
FIG. 19 is a perspective view illustrating a second gear.
FIG. 20 is a perspective view illustrating the shape of a display when a door is closed and opened by the present disclosure.
FIG. 21 and FIG. 22 are perspective views illustrating a back cover of a display module by the present disclosure.
FIG. 23 is a perspective view illustrating a vehicle mounting structure of the display apparatus for a vehicle by the present disclosure.
FIG. 24 is a perspective view illustrating the rear surface of FIG. 23.
FIG. 25 is a flowchart illustrating a driving method of the moving door module.
FIG. 26 is a flowchart illustrating the defense mechanism in response to generation of an external force.
FIG. 27 is a flowchart of an embodiment different from FIG. 26.

### DETAILED DESCRIPTION OF MAIN ELEMENTS

1000: Display apparatus for vehicle
100: Display module
110: Display
120: Back cover
121: Hole
122: Drainage channel
130: Stopper
200: Moving door module
210: Door
220: Supporting frame
230-1: First link
230-2: Second link
230-3: Third link
230-4: Fourth link
240-4: Fourth gear
240-5: Fifth gear
250-1: First rib
250-2: Second rib
260: Main body
270: Rack gear
280-1: First bearing
280-2: Second bearing
290-1: First wave washer
290-2: Second wave washer
300: Driving module
310: Motor
320-1: First gear
320-2: Second gear
320-3: Third gear
330: Gear sensor
340: Sensing switch
350: Hall sensor
S: Coil spring
SC: Spring clutch

### DETAILED DESCRIPTION

Exemplary embodiments of the present disclosure are provided and referred to hereafter to describe the present disclosure, the operational advantages of the present disclosure, and objects achieved by implementing the present disclosure.

First, terminologies used herein are provided only to describe specific embodiments without limiting the present disclosure, and similar forms may include plural forms unless clearly state otherwise. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

In describing the present disclosure, well-known functions or constructions will not be described in detail since they may unnecessarily obscure the understanding of the present disclosure.

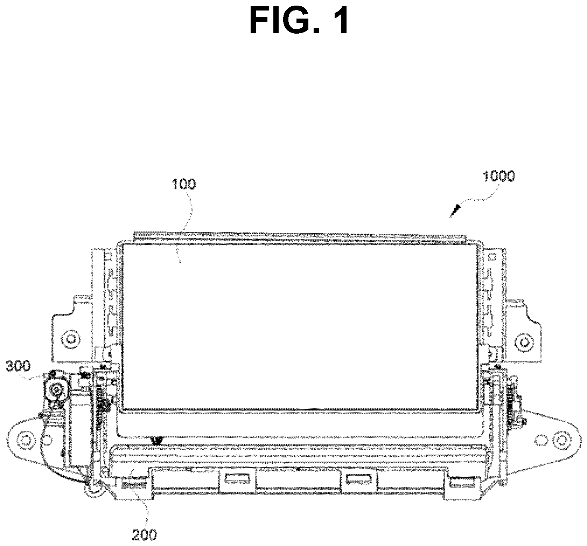

FIG. 1 is a perspective view illustrating a display apparatus for a vehicle by the present disclosure.

As illustrated in FIG. 1, a display apparatus 100 for a vehicle that is a display apparatus disposed in a vehicle by a present disclosure may include a display module 100, a moving door module 200, and a driving module 300.

The display module 100 can provide operation information of the display apparatus 100 for a vehicle to a user or can provide various items of information in accordance with requests of a user.

The moving door module 200 may be connected with a portion of the display module 100 to be able to be positioned on a portion or at the lower end of the front surface of the display module 100, and accordingly, it can perform the function of opening/closing the display module 100.

The driving module 300 may receive a control signal and control, based on the received control signal, the position of the moving door module 200 by transmitting power to the moving door module 200.

In this case, the driving module 300 can determine whether to open/close the moving door module 200, and can control opening/closing of the moving door module in accordance with the determination result and a control signal that is input.

Hereafter, the components included in each module and the operation are described in detail.

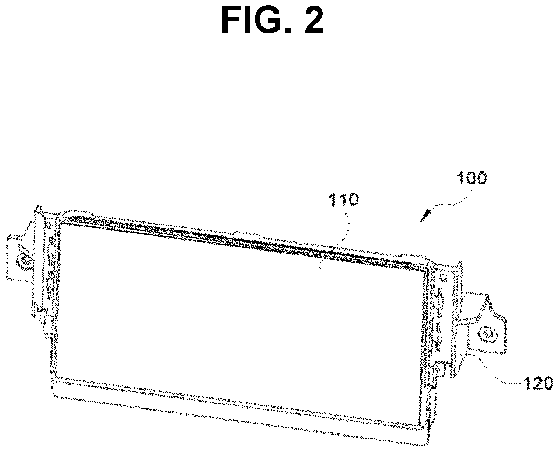

FIG. 2 is a perspective view illustrating a display module by the present disclosure.

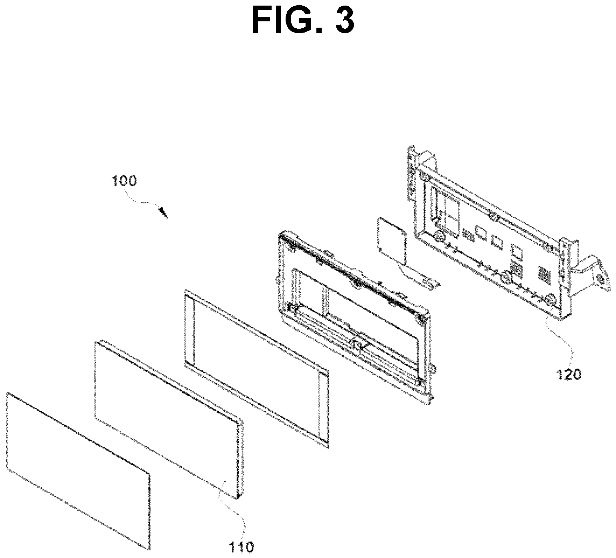

FIG. 3 is an exploded view of FIG. 2.

As illustrated in FIG. 2 and FIG. 3, the display module 100 may include a display 110 and a back cover 120.

The display 110 can provide operation information of the display apparatus 100 for a vehicle to a user or can provide various items of information in accordance with requests of a user.

The back cover 120 is coupled to the rear of the display 110 and can serve to protect the rear of the display 110. In this case, the cover 120 may include a PC-ABS plastic material. The PC-ABS plastic material is plastic that provides only the advantages of PC and ABS material by integrating the heat resistance of PC and the flexural strength of ABS, whereby it is possible to maintain excellent impact resistance at room temperature and low temperature.

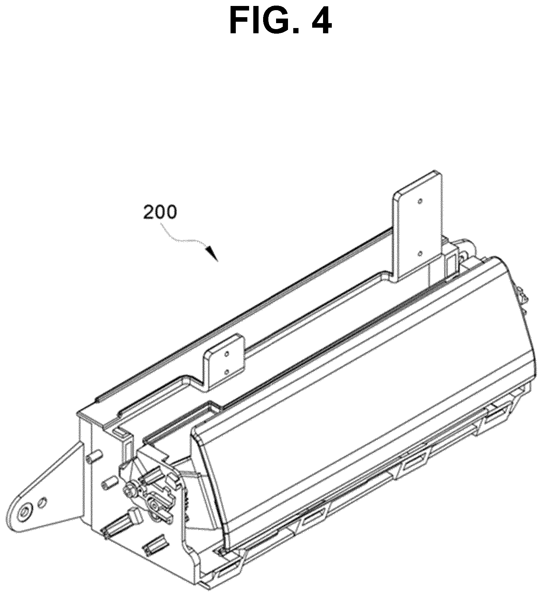

FIG. 4 is a perspective view illustrating a moving door module by the present disclosure.

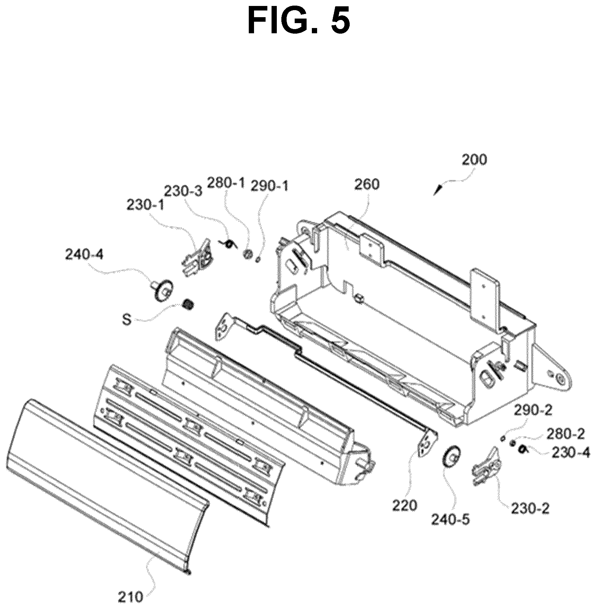

FIG. 5 is an exploded view of FIG. 4.

As illustrated in FIG. 4 and FIG. 5, the moving door module 200 may include a door 210, a supporting frame 220, first and second links 230-1 and 230-2, and fourth and fifth gears 240-4 and 240-5.

The door 210 may have a predetermined size to be able to cover at least partial area of the display 110 of the display module 100.

The supporting frame 220 has a length by the length of the door 210 in a first direction of the first direction that is the longitudinal direction of the door 210 and a second door that is a direction perpendicular to the first direction, and may include a predetermined hole at both ends.

In detail, the supporting frame 220 may be a chassis link, whereby it is possible to implement balanced movement between left and right symmetric structure of parts.

The first and second links 230-1 and 230-2 may be disposed outside the holes formed at both ends of the supporting frame 220, respectively.

The fourth and fifth gears 240-4 and 240-5 are disposed at both ends of the door 210 and may be disposed at positions being at least partially in contact with the first and second links 230-1 and 230-2, respectively. Accordingly, as the first and second links 230-1 and 230-2 are rotated, the fourth and fifth gears 240-4 and 240-5 are also rotated, and as the fourth and fifth gears 240-4 and 240-5 are moved, the door 210 can also be rotated or moved.

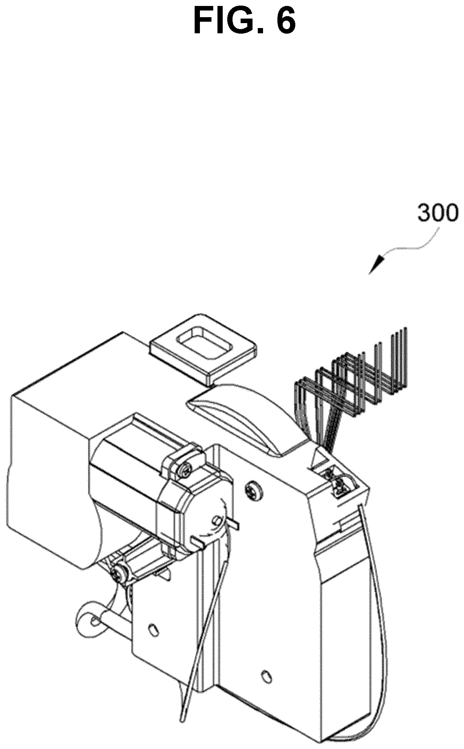

FIG. 6 is a perspective view illustrating a driving module by the present disclosure.

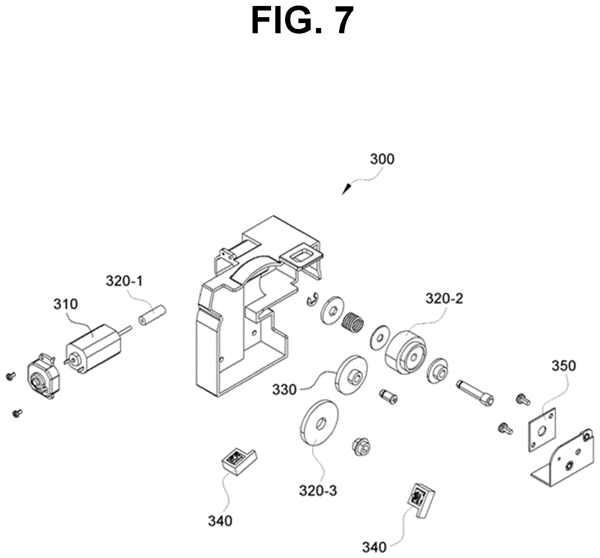

FIG. 7 is an exploded view of FIG. 6.

As illustrated in FIG. 6 and FIG. 7, the driving module 300 may include a motor 310, first to third gears 320-1, 320-2, and 320-3, a gear sensor 330, and a plurality of sensing switches 340.

The motor 310 can provide a driving force.

The first to third gears 320-1, 320-2, and 320-3 are connected with the motor 310 and can be rotated by a driving force transmitted from the motor 310.

The gear sensor 330 can sense the state of at least one of the first, second and third gears 320-1, 320-2, and 320-3.

The plurality of sensing switches 340 can sense the operation of the moving door module 200.

In detail, as for the first to third gears 320-1, 320-2, and 320-3, the first gear 320-1 may be a worm gear and is at least partially connected with the motor 310, whereby it can receive a driving force from the motor 310. The second gear 320-2 may be a helical gear and is disposed under the first gear 320-1, so when the first gear 320-1 is rotated, the second gear 320-2 can also be rotated. The gear sensor 330 may be disposed at a position that is in contact with at least a portion of a surface of the second gear 320-2. Accordingly, the gear sensor 330 can be rotated with rotation of the second gear 320-2. The third gear 320-3 may be a spur gear and is disposed at a position that is in contact with at least a portion of a surface of the gear sensor 330, so the third gear 320-3 can be rotated along with the gear sensor 330.

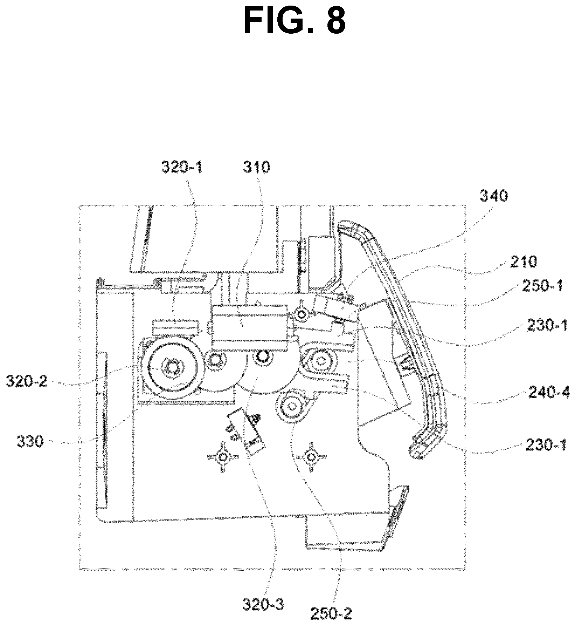

FIG. 8 is a perspective view illustrating the driving module and the moving door module in closing of the present disclosure.

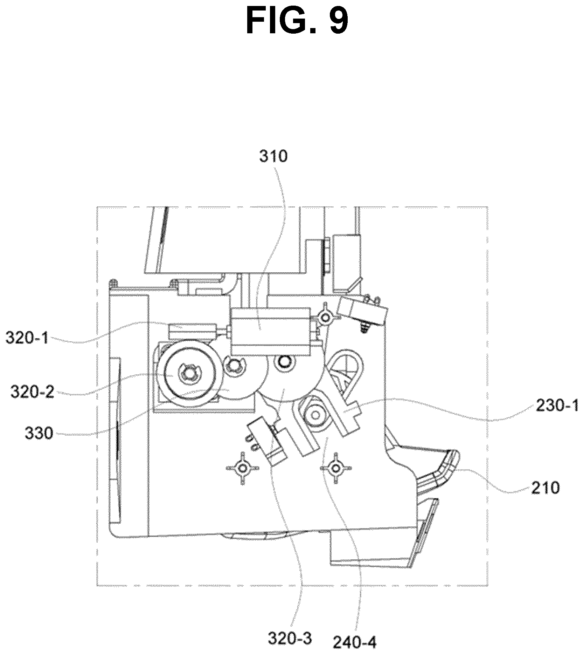

FIG. 9 is a perspective view illustrating the driving module and the moving door module in opening of the present disclosure.

Further, describing again a driving method of the moving door module, as illustrated in FIG. 8, the motor 310 transmits a driving force to the first gear 320-1, and accordingly, the second gear 320-2 positioned in contact with it is rotated, and accordingly, the gear sensor 330 positioned in contact with it is rotated, and accordingly, the third gear 302-3 positioned in contact with it can be rotated. Further, the driving force is transmitted to the first and second links 230-1 and 230-2 included in the moving door module 200, the fourth and fifth gears 240-4 and 240-5 positioned in contact with them are rotated, and the door 210 can be rotated or moved.

Further, the moving door module 200 may further include first and second ribs 250-1 and 250-2 disposed on each of the first and second links 230-1 and 230-2.

In detail, when the first and second links 230-1 and 230-2 are rotated by rotation of the first to third gears 320-1, 320-2, and 320-3, the first and second ribs 250-1 and 250-2 disposed on both of the first and second links 230-1 and 230-2 detect at least one sensing switch 340 of the plurality of sensing switches 340, whereby it is possible to provide an ON or OFF signal to the sensing switch 340.

In more detail, as illustrated in FIG. 8, when the door 210 is closed and when the first and second links 230-1 and 230-2 are rotated upward and the first ribs 250-1 disposed at the upper sides of the first and second links 230-1 and 230-2 detect any one sensing switch 340 of the plurality of sensing switches 340, the door 210 can become a closed state. In this case, the sensing switch 340 may be a sensing switch 340 that provides a closing signal.

On the contrary, as illustrated in FIG. 9, when the first and second links 230-1 and 230-2 are rotated downward and the second ribs 250-2 disposed at the lower sides of the first and second links 230-2 and 230-2 detect any one sensing switch 340 of the plurality of sensing switches 340, the door 210 can become an open state. In this case, the sensing switch 340 may be a sensing switch 340 that provides an open signal.

Further, in the state where the door 210 is closed or open, when the first and second ribs 250-1 and 250-2 are rotated upward or downward and positioned at the middle between the upper side and the lower side, the first and second ribs 250-1 and 250-2 may not be detected by any one of the plurality of sensing switches 340.

Meanwhile, referring to FIG. 8 again, the driving module 300 may further include a shaft gear (not illustrated).

The shaft gear may integrally connect the third gear 320-3 and any one link of the first or second link 230-1 and 230-2. Accordingly, when a driving force is transmitted by the motor 310, any one link of the first or second link 230-1 and 230-2 connected with the third gear 320-3 can also be rotated.

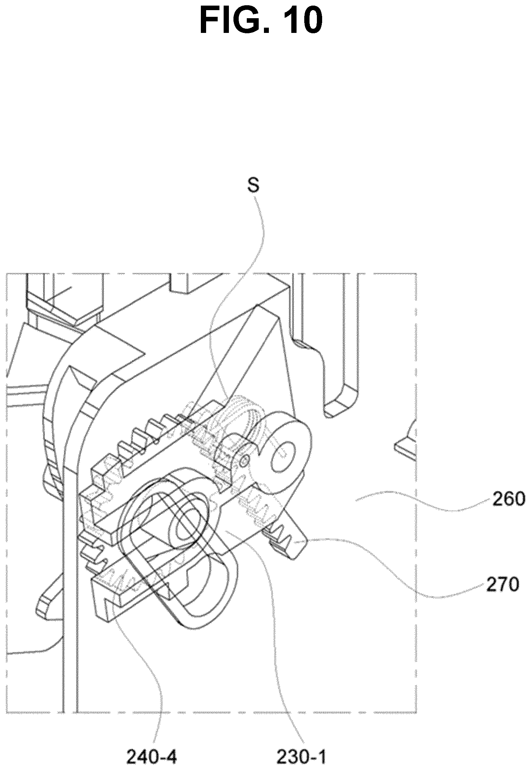

FIG. 10 is a partially enlarged perspective view illustrating the moving door module.

As illustrated in FIG. 10, the first and second links 230-1 and 230-2 may have a U-shape.

Further, the fourth and fifth gears 240-4 and 240-5 may be disposed at the centers of the U-shapes of the first and second links 230-1 and 230-2, respectively. Accordingly, when the first and second links 230-1 and 230-2 are rotated, the fourth and fifth gears 240-4 and 240-5 can also be rotated.

Further, the moving door module 200 may further include a main body 260 and a plurality of rack gears 270.

The main body 260 can accommodate at least some of the door 210, the supporting frame 220, the first to second links 230-1 and 230-2, and the fourth and fifth gears 240-4 and 240-5.

The rack gear 270 may be disposed at both ends of the main body 260.

Accordingly, the fourth and fifth gears 240-4 and 240-5 can be rotated along the rack gears 270, respectively, and are provided integrally with the moving door module 200, so the moving door module 200 can also be rotated.

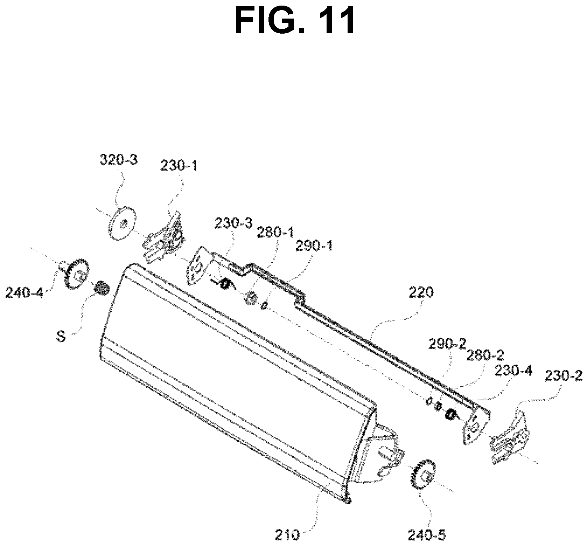

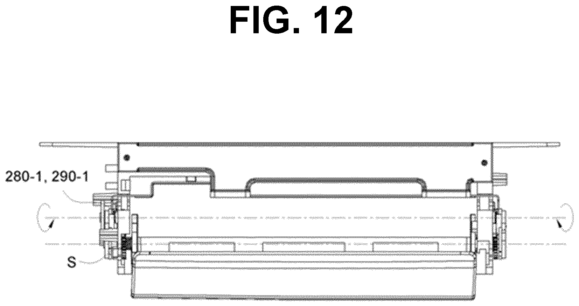

FIG. 11 and FIG. 12 are views illustrating some parts based on a reference axis of the moving door module.

As illustrated in FIG. 11 to FIG. 12, the moving door module 200 may further include third and fourth links 230-3 and 230-4, first and second bearings 280-1 and 280-2, and first and second wave washers 290-1 and 290-2.

The third and fourth links 230-3 and 230-4 are disposed respectively in contact with the holes at both sides of the supporting frame 220 disposed on the rear of the door 210 and may be disposed inside the supporting frame 220.

The first and second bearings 280-1 and 280-2 may be disposed inside the third and fourth links 230-3 and 230-4, respectively.

The first and second wave washers 290-1 and 290-2 may be disposed inside the first and second bearings 280-1 and 280-2, respectively.

In this case, the third to fourth links 230-3 and 230-4, the first to second bearings 280-1 and 280-2, and the first to second wave washers 290-1 and 290-2 are all disposed on the same line as the first to second links 230-1 and 230-2 and the third gear 320-3, so they can share the same center axis. Accordingly, it is possible to restrict the degree of freedom except for the center axis.

Further, the moving door module 200 may further include a coil spring S in the gap formed between the door 210 and the fourth gear 240-4. Accordingly, the gap formed between the door 210 and the fourth gear 240-4 is removed, so there is an effect that it is possible to prevent unnecessary movement and noise.

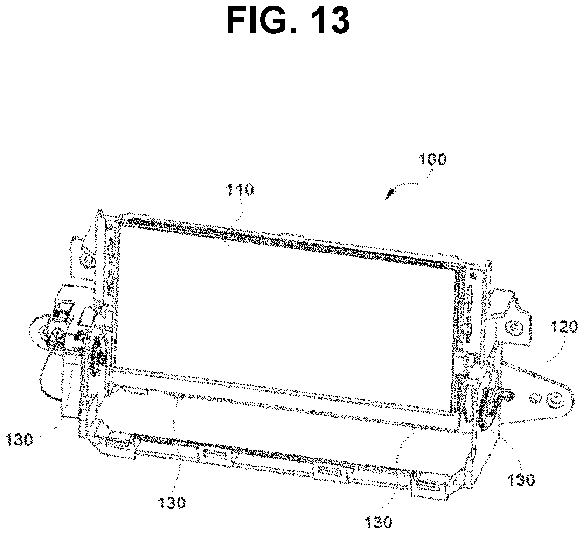

FIG. 13 is a perspective view illustrating application of a stopper according to the present disclosure.

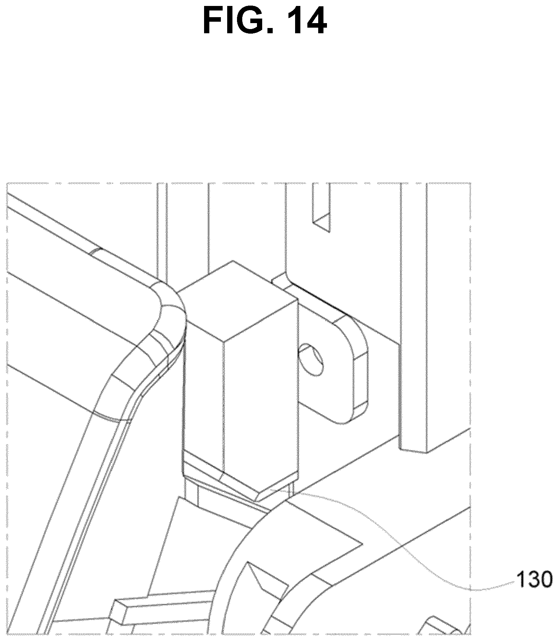

FIG. 14 is an enlarged perspective view of FIG. 13.

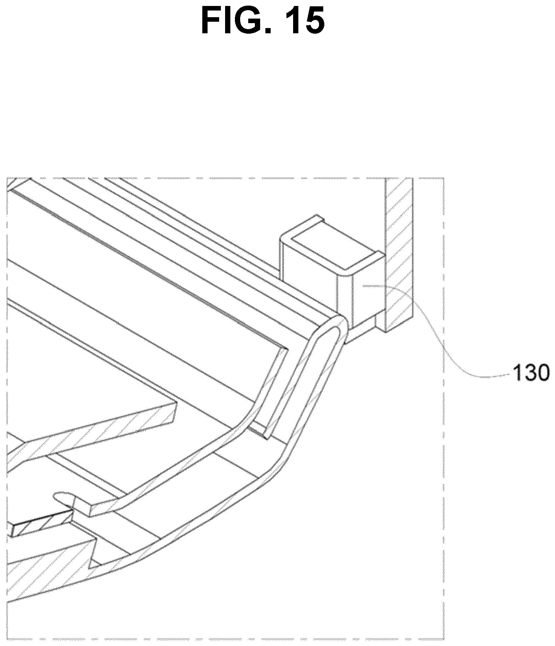

FIG. 15 is an enlarged perspective view of a portion different from FIG. 14.

As illustrated in FIG. 13 to FIG. 15, the display module 100 may further include a plurality of stoppers.

The stoppers 130 are intended to prevent impact noise when the door 210 is opened/closed, and may include a stopper 130 made of a rubber material at any one of both ends and the lower end of the display module 100 that are the positions with which the door 210 comes in contact when opening/closing.

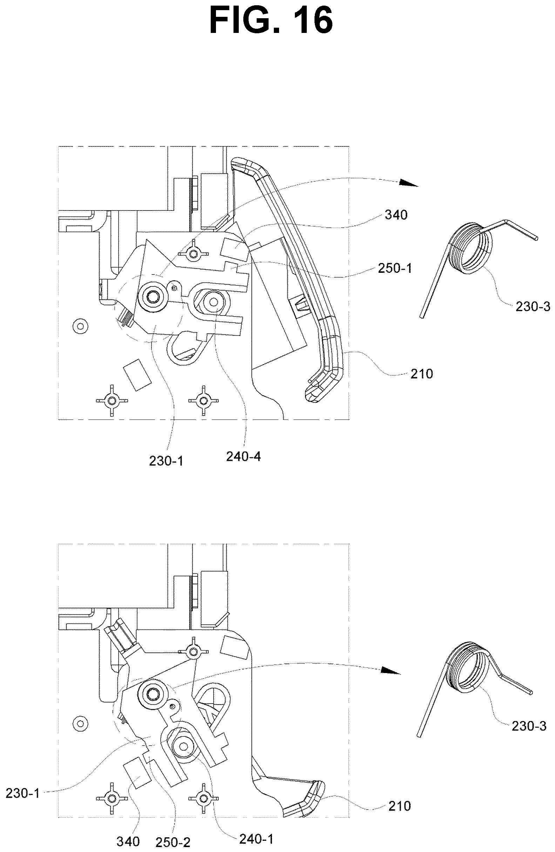

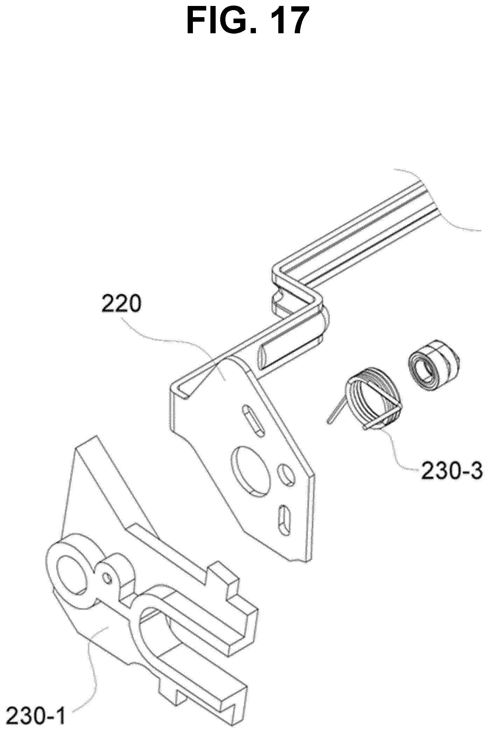

FIG. 16 and FIG. 17 are perspective views illustrating the positions where fifth and sixth links by the present disclosure are disposed.

As illustrated in FIG. 16 to FIG. 17, the moving door module 200 may further include fifth and sixth links 230-3 and 230-4.

The fifth and sixth links 230-3 and 230-4 may be respectively fixed at ends to grooves formed at the main body 260 of the moving door module 200 and at other ends to the holes of the first and second links 230-1 and 230-2.

In detail, the fifth and sixth links 230-3 and 230-4 may be spring links. Accordingly, when the door 210 is rotated by a driving force of the motor 310, the fifth and sixth links 230-3 and 230-4 are tensioned, whereby it is possible to provide an assistance force for movement of the door 210 when the door 210 is changed into an open or closed state.

In more detail, when the door 210 is changed into the open state from the closed state, the force of the fifth and sixth links 230-3 and 230-4 is increased compared to the pervious state and the door 210 can be moved downward and closed by the driving force of the motor 310 while overcoming the force by the fifth and sixth links 230-3 and 230-4. On the other hand, when the door 210 is changed into the closed state, the force of the fifth and sixth links 230-3 and 230-4 is decreased compared to the pervious state and the door 210 can be moved upward and opened by the driving force of the motor 310 and the force by the fifth and sixth links 230-3 and 230-4 while overcoming the force by gravity.

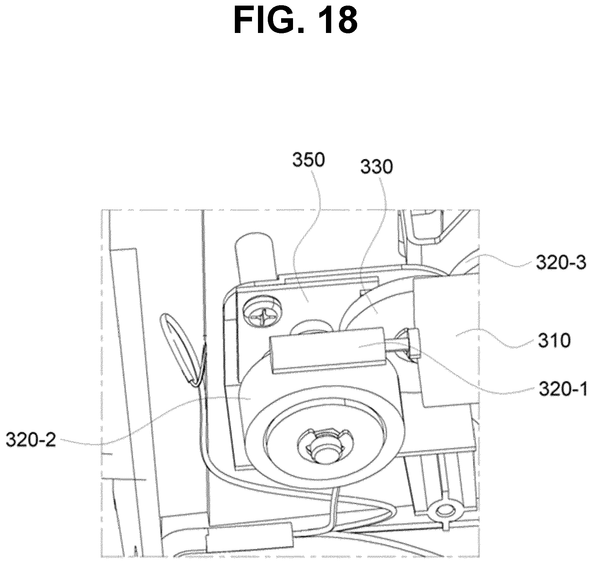

FIG. 18 is a perspective view illustrating a defense mechanism in response to generation of an external force.

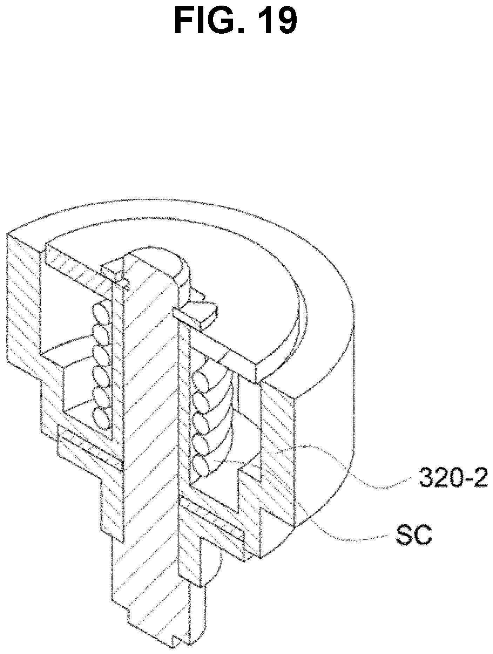

FIG. 19 is a perspective view illustrating a second gear.

As illustrated in FIG. 18 to FIG. 19, the display apparatus 100 for a vehicle by the present disclosure may include a defense mechanism against external forces.

In detail, the driving module 300 may further include a Hall sensor 350.

The Hall sensor 350 can sense stoppage or a problem of the gear sensor 330 while the motor 310 is rotated.

In this case, the Hall sensor 350 is a sensor that senses existence and strength of a magnetic field using Hall effect.

In detail, N-S magnetism is uniformly positioned inside the Hall sensor 350, and during normal operation, the Hall sensor 350 can read signal by the magnetism at equal intervals. However, when an external force is generated, the motor 310 keeps operating, but the gear sensor 330, the moving door module 200, the third to fifth gears 320-3, 240-4, and 240-5, and the first and second links 230-1 and 230-2 are stopped or the cycle changes, so the Hall sensor 350 can sense generation of the external force.

Accordingly, when the Hall sensor 350 senses stoppage of any one of the gear sensor 330, the moving door module 200, the third to fifth gears 320-3, 240-4, and 240-5, and the first and second links 230-1 and 230-2 or variation of the cycle due to an external force, the motor 310 can operate in an opposite direction of the current operation direction.

For reference, the targets of generation of an external force is the diameter of a spring clutch SC disposed inside the second gear 320-2, the diameter of small gears, the effective number of turns, etc., and they can be adjusted to meet required specifications.

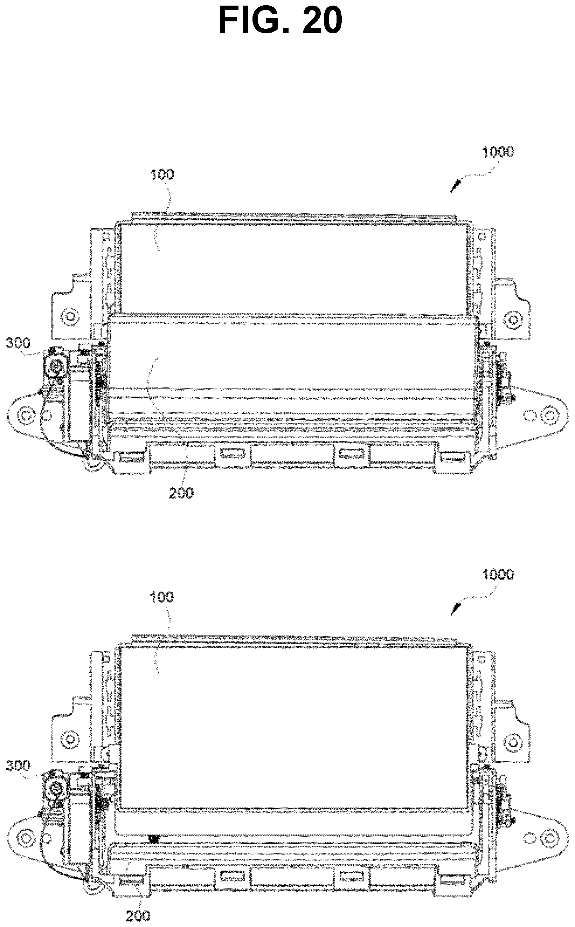

FIG. 20 is a perspective view illustrating the shape of a display when a door is closed and opened by the present disclosure.

As illustrated in FIG. 20, when the moving door module 200 is in the closed state, the display module 100 can turn off a backlight of the display 110 in the area hidden by the door 210 in the screen area. To this end, it is preferable to apply a local dimming LCD type to the display 110. Accordingly, it is possible to minimize power consumption, which can improve the lifespan of the product.

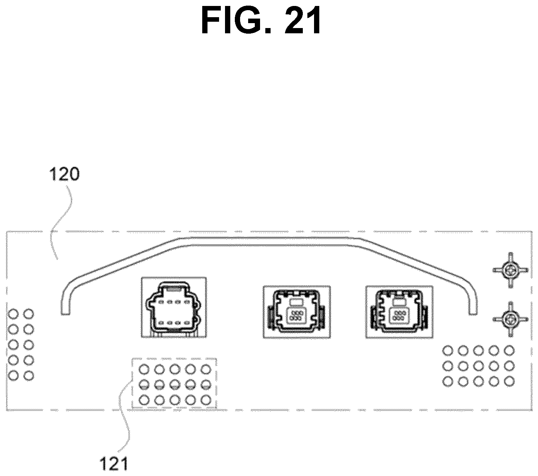

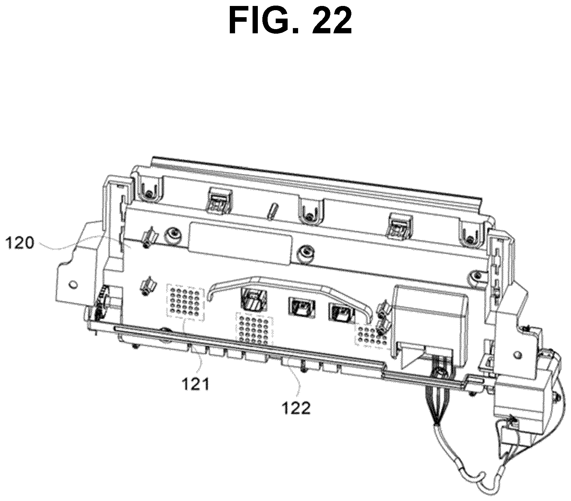

FIG. 21 and FIG. 22 are perspective views illustrating a back cover of a display module by the present disclosure.

As illustrated in FIG. 21, the display module 100 may include a back cover 120.

The back cover 120 is disposed on the rear of the display 110 and can cover the rear of the display module 100.

In this case, the back cover 120 may include a plurality of holes 121. Accordingly, it is possible to prevent overheating due to the display 110.

Further, as illustrated in FIG. 22, the back cover 120 may include a drainage channel 122. Accordingly, there is an effect of being able to discharge water when water flows into the product.

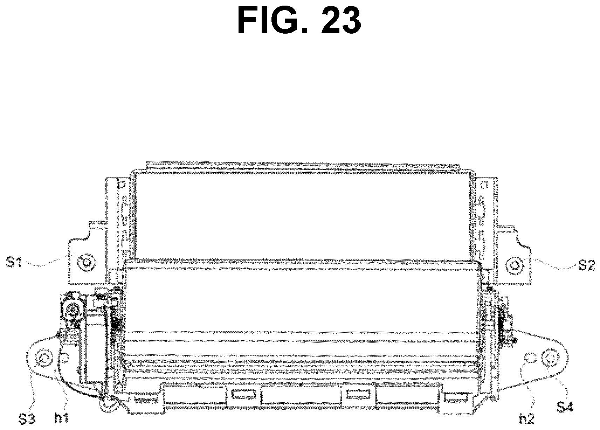

FIG. 23 is a perspective view illustrating a vehicle mounting structure of the display apparatus for a vehicle by the present disclosure.

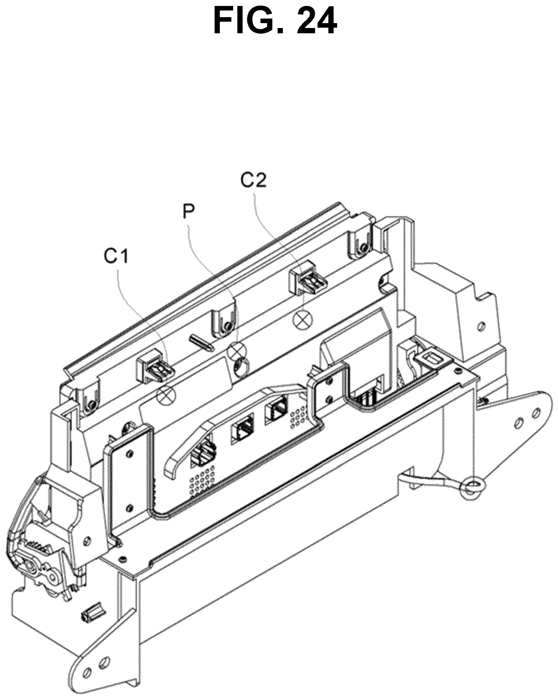

FIG. 24 is a perspective view illustrating the rear surface of FIG. 23.

As illustrated in FIGS. 23 to 24, in a vehicle mounting structure for satisfying the automotive environmental reliability standards, particularly, for vibration durability, it is required to appropriately combine at least four screw assemblies S1 to S4, two clips C1 and C2 and locators h1 and h2 (locator holes), and a locator pin p. The example illustrated in FIG. 23 to FIG. 24 is only one embodiment and the present disclosure is not limited thereto, and the positions and quantities of the screws, clips, and locators can be changed in consideration of the structural characteristics and weight of the product and the condition of the cockpit of a vehicle.

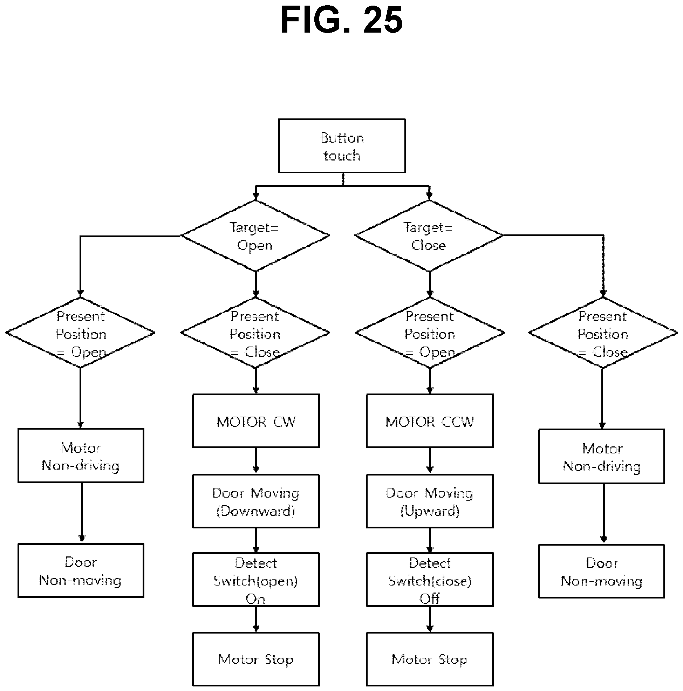

FIG. 25 is a flowchart illustrating a driving method of the moving door module.

As illustrated in FIG. 25, when a control signal that is input is an opening signal, the driving module 300 can determine that the door 210 is currently in the open state when the sensing switch (open switch) positioned at the lower side of the plurality of sensing switches 340 is detected due to rotation of the first and second links 230-1 and 230-2. If the door 210 is currently in the open state, the motor 310 no longer rotates and the door 210 can also maintain the current state.

Further, in the driving module 300, when a control signal that is input is an opening signal and when the current state of the door 210 is the closed state, the motor 310 operates and the door 210 moves downward. As the door 210 moves downward, the first and second links 230-1 and 230-2 detect the sensing switch (open switch) positioned at the lower side of the plurality of sensing switches 340, and then the motor 310 can stop.

On the contrary, when a control signal that is input is a closed signal, the driving module 300 can determine that the door 210 is currently in the open state when the sensing switch (open switch) positioned at the lower side of the plurality of sensing switches 340 is detected due to rotation of the first and second links 230-1 and 230-2. In this case, the motor 310 operates and the door 210 moves upward. As the door 210 moves upward, the first and second links 230-1 and 230-2 detect the sensing switch (closed switch) positioned at the upper side of the plurality of sensing switches 340, and then the motor 310 can stop.

Further, in the driving module 300, when a control signal that is input is a closing signal and when the current state of the door 210 is the closed state, the motor 310 no longer operates and the door 210 can also maintains the current state.

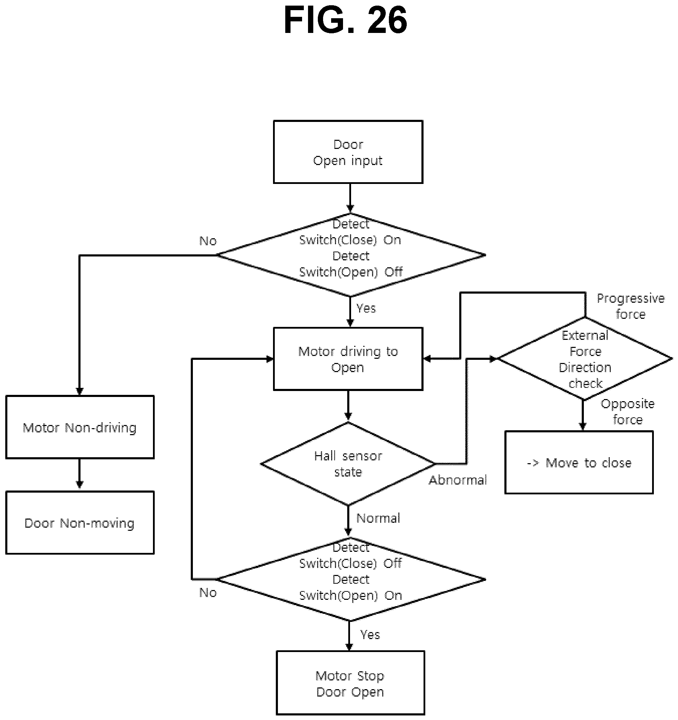

FIG. 26 is a flowchart illustrating the defense mechanism in response to generation of an external force.

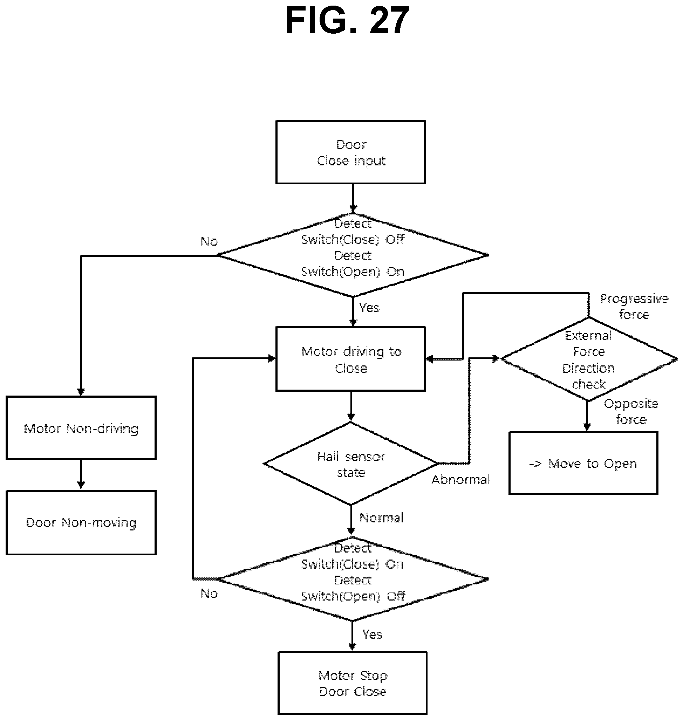

FIG. 27 is a flowchart of an embodiment different from FIG. 26.

As illustrated in FIG. 26, when a control signal that is input is an opening signal and when the sensing switch (open switch) positioned at the lower side of the plurality of sensing switches 340 is detected, it is possible to determine that the door 210 is currently in the open state. If the door 210 is currently in the open state, the motor 310 no longer rotates and the door 210 can also maintain the current state.

Further, in the driving module 300, when a control signal that is input is an opening signal and when the current state of the door 210 is the closed state, the motor 310 operates and the state of the Hall sensor 350 can be determined. When the state of the Hall sensor 350 is a normal state, the door 210 moves downward. As the door 210 moves downward, the first and second links 230-1 and 230-2 detect the sensing switch (open switch) positioned at the lower side of the plurality of sensing switches 340, and then the motor 310 can stop. If, in this case, when the first and second links 230-1 and 230-2 fail to detect the sensing switch (open switch) positioned at the lower side of the plurality of sensing switches 340, the motor 310 keeps being driven and the step for opening the door 210 can be performed again.

Meanwhile, when the state of the Hall sensor 350 is an abnormal state, the direction of an external force is checked, and when the direction of the external force is opposite to the direction of the driving force by the motor 310, the motor 310 operates in the opposite direction of the current driving direction of the motor 310, whereby the door 210 can maintain the closed state. If the direction of an external force is the same as the direction of the driving force by the motor 310, the motor 310 can be driven in the same direction as the current driving direction.

As illustrated in FIG. 27, when a control signal that is input is a closed signal and when the sensing switch (open switch) positioned at the upper side of the plurality of sensing switches 340 is detected, it is possible to determine that the door 210 is currently in the closed state. If the door 210 is currently in the closed state, the motor 310 no longer operates and the door 210 can also maintain the current state.

Further, in the driving module 300, when a control signal that is input is a closing signal and when the current state of the door 210 is the open state, the motor 310 operates and the state of the Hall sensor 350 can be determined. When the state of the Hall sensor 350 is a normal state, the door 210 moves upward. As the door 210 moves upward, the first and second links 230-1 and 230-2 detect the sensing switch (closed switch) positioned at the upper side of the plurality of sensing switches 340, and then the motor 310 can stop. If, in this case, when the first and second links 230-1 and 230-2 fail to detect the sensing switch (closed switch) positioned at the upper side of the plurality of sensing switches 340, the motor 310 keeps being driven and the step for closing the door 210 can be performed again.

Meanwhile, when the state of the Hall sensor 350 is an abnormal state, the direction of an external force is checked, and when the direction of the external force is opposite to the direction of the driving force by the motor 310, the motor 310 operates in the opposite direction of the current driving direction of the motor 310, whereby the door 210 can maintain the open state. If the direction of an external force is the same as the direction of the driving force by the motor 310, the motor 310 can be driven in the same direction as the current driving direction.

According to the display apparatus for a vehicle according to various embodiments of the present disclosure described above, a dynamic door is applied to a simple display of the related art, so there is an effect of being able to increase the marketability.

Further, since the display is fixed and only the door can be moved, so there is an effect of being able to increase the robustness of the apparatus.

## Claims

1. A display apparatus for a vehicle, comprising:
a display module configured to provide operation information of the display apparatus;
a moving door module connected with a portion of the display module and configured to perform a function of opening/closing the display module; and
a driving module configured to receive a control signal and control a position of the moving door module based on the received control signal,
wherein the driving module is configured to control, based on the received control signal, opening/closing of the moving door module depending on whether the moving door module is opened or closed.

2. The display apparatus for a vehicle of claim 1, wherein, when the moving door module is in a closed state, the display module turns off a backlight of the display that corresponds to an area hidden by a door of the moving door module.

3. The display apparatus for a vehicle of claim 1, or 2, wherein:
the display module includes a back cover covering a rear of the display module, and
the back cover includes a plurality of holes or a drainage channel located at a lower end of the back cover.

4. The display apparatus for a vehicle of claim 1, 2, or 3, wherein the driving module includes:
a motor configured to provide a driving force;
a first gear, a second gear and a third gear that are connected to the motor and configured to be rotated by the driving force transmitted from the motor;
a gear sensor configured to sense a state of at least one of the first, second and third gears; and
a plurality of sensing switches configured to sense an operation of the moving door module.

5. The display apparatus for a vehicle of claim 4, wherein the moving door module includes:
a door having a predetermined size and covering at least a portion of a display of the display module;
a supporting frame supporting the door;
a first link and a second link that are disposed on both sides of the supporting frame, respectively; and
a fourth gear and a fifth gear that are disposed at positions in contact with at least a portion of the first and second links, respectively.

6. The display apparatus for a vehicle of claim 5, wherein:
the moving door module further includes first and second ribs respectively disposed on both sides of the first and second links, and
when the first and second links are rotated by rotation of the first, second and third gears, the first and second ribs detect at least one of the plurality of sensing switches.

7. The display apparatus for a vehicle of claim 4, wherein:
the first gear is connected to at least a portion of the motor,
the second gear is disposed under the first gear and rotated by rotation of the first gear,
the gear sensor is disposed at a position in contact with at least a portion of a surface of the second gear and is rotated by rotation of the second gear, and
the third gear is disposed at a position in contact with at least a portion of a surface of the gear sensor and is rotated by rotation of the gear sensor.

8. The display apparatus for a vehicle of claim 7, wherein:
the first gear comprises a worm gear,
the second gear comprises a helical gear, and
the third gear comprises a spur gear.

9. The display apparatus for a vehicle of any one of claims 5 to 8, wherein the driving module further includes a shaft gear integrally connecting the third gear and at least one of the first or second link.

10. The display apparatus for a vehicle of any one of claims 5 to 9, wherein:
the first and second links are U-shaped, and
the fourth and fifth gears are disposed at a center of the U-shaped first and second links, respectively, to rotate together when the first and second links are rotated.

11. The display apparatus for a vehicle of any one of claims 5 to 10, wherein:
the moving door module further includes:
a main body accommodating at least some of the door, the supporting frame, the first to second links, and the fourth to fifth gears; and
a plurality of rack gears disposed at both ends of the main body, respectively, and
the fourth and fifth gears are rotated along the plurality of rack gears and are integrated with the moving door module.

12. The display apparatus for a vehicle of any one of claims 5 to 11, wherein the moving door module further includes:
a main body accommodating at least some of the door, the supporting frame, the first to second links, and the fourth to fifth gears;
third and fourth links sharing a same center axis with the first and second links and engaged to holes at both sides of the supporting frame, respectively;
first and second bearings sharing a same center axis with the first and second links and disposed inside the third and fourth links, respectively; and
first and second wave washers sharing a same center axis with the first and second links and disposed inside the first and second bearings, respectively.

13. The display apparatus for a vehicle of claim 12, wherein the third and fourth links respectively a first end fixed to a groove formed at the main body and a second hole engaged to the first and second links.

14. The display apparatus for a vehicle of any one of claims 5 to 13, wherein the display module further includes a plurality of stoppers including a rubber material located at one of both ends and a lower end of the display module that are positions with which the door comes in contact when opening/closing.

15. The display apparatus for a vehicle of any one of claims 5 to 14, wherein the moving door module further includes a coil spring disposed between the door and the fourth gear.

16. The display apparatus for a vehicle of any one of claims 4 to 15, wherein the driving module further includes a Hall sensor sensing stoppage or a problem of the gear sensor.

17. The display apparatus for a vehicle of claim 16, wherein when the stoppage or problem of the gear sensor is sensed by the Hall sensor, the motor operates in an opposite direction of a current operation direction.
